# EUROPEAN PATENT SPECIFICATION

(11) **EP 2 794 802 B1**
(45) Date of publication and mention of the grant of the patent: **07.12.2016**
(21) Application number: 12809984.3
(22) Date of filing: 19.12.2012
(51) Int. Cl.: C09K 3/10, C08K 9/06, C08L 13/02

(54) **CONTAINER SEALANT COMPOSITION**
DICHTMITTELZUSAMMENSETZUNG FÜR BEHÄLTER
COMPOSITION DE SCELLEMENT POUR RÉCIPIENT

(30) Priority: 20.12.2011 US 201161577904 P
(43) Date of publication of application: 29.10.2014
(73) Proprietor: GCP Applied Technologies Inc., Cambridge, MA 02140 (US)
(72) Inventor: SUN, Qi, Zama-shi Kanagawa-ken 252-0004 (JP); TAKAHASHI, Toru, Ebina-shi Kanagawa Prefecture 243-04046 (JP); IKESHIRO, Yasushi, Sagamihara-shi Kanagawa Prefecture 252-0202 (JP)
(74) Representative: Duckworth, Timothy John
(86) International application number: PCT/US2012/070451
(87) International publication number: WO 2013/096360

(56) References cited:
- EP-A1- 0 350 204
- US-A- 5 763 388
- GOERL U ET AL: "RUBBER/FILLER COMPOUND SYSTEMS IN POWDER FORM A NEW RAW MATERIAL GENERATION FOR SIMPLIFICATION OF THE PRODUCTION PROCESSES IN THE RUBBER INDUSTRY PART 2: POWDER RUBBER BASED ON E-SBR/SILICA/SILANE//KAUTSCHUK/FUELLVERBUN DSYSTEME IN PULVERFORM - NEUE ROHST", KAUTSCHUK UND GUMMI - KUNSTSTOFFE, HUTHIG VERLAG, HEIDELBERG, DE, vol. 55, no. 10, 1 October 2002 (2002-10-01), pages 502-506,508, XP001132688, ISSN: 0948-3276

## Description

### Background of the Invention

The present invention relates to a container sealant composition with improved tensile strength and reduced squeeze-out during seaming.

Container sealant compositions based on a rubbery polymer, such as styrene-butadiene rubber (SBR) and carboxylated styrene-butadiene rubber (CSBR) are well known in the art. In order to obtain acceptable water resistance, extrusion resistance and container seam performance, such compositions often include a crosslinking agent, such as a peroxide or zinc compound, to form a crosslinked network within the rubber component. Such sealant compositions also typically include a filler and a tackifier. Examples of such sealant compositions are disclosed in US 4,189,418, WO 82/02721, EP 0182674, US 5,747,579, and WO2008/157217. Although some of the aforementioned disclosures include various silicas among a list of potential fillers, it has been found that the addition of a typical colloidal silica, which is stabilized by double electron layers, will cause the rubber latex to gel, rendering it unusable as a container sealant.

EP 0350204 discloses a container sealing composition comprising a styrene butadiene rubber copolymer with fumaric acid, methacrylic acid, itaconic acid or acrylic acid, a filler and a tackifier resin.

In US 5,763,388 there is suggested a method of making aqueous compatibilized silica slurry that may be more readily blended with a rubber latex. Fumed silica and precipitated silica are mentioned for the silica dispersion. The aqueous compatibilized silica slurry is made by treating the silica dispersion with an organosilane coupling agent that includes a reactive functional group. It is suggested that this treatment allows the incorporation of greater quantities of compatibilized silica slurry in the rubber polymer. However, this patent does not suggest that the compatibilized silica would be useful with respect to carboxylated rubbers or that it would be useful with respect to container sealant compositions.

### Summary of the Invention

The present invention embraces a container sealant composition comprising a latex of a carboxylated styrene-butadiene rubber (CSBR) and a filler comprising colloidal silica pretreated with an organosilane.

The present invention also includes a method for sealing a can. The method comprises coating an aqueous dispersion of the container sealant composition according to the present invention onto the curl area of a can cap, drying the composition, placing the coated can cap onto a can body filled with contents, and sealing the can by seaming the flange area of the can body and the curl area of the cap to obtain a sealed can containing the contents. The method may additionally include subjecting the sealed can to a heat treatment to sterilize the contents.

### Detailed Description of the Invention

The container sealant composition of the present invention comprises a latex of a carboxylated styrene-butadiene rubber (CSBR). The CSBR may be any of those conventionally used to form container sealant compositions. Typical CSBR's are disclosed in US 5,747,579 and include copolymers of styrene and butadiene with a carboxylic acid such as fumaric acid, acrylic acid, methacrylic acid, itaconic acid, aconitic acid, maleic acid or corotonic acid or with an anhydride such as maleic anhydride or itaconic anhydride. A preferred CSBR is a copolymer of styrene and butadiene with acrylic acid. Generally, the amount of acid (or anhydride) copolymerized with the styrene-butadiene will be about 0.5% to 6% by weight of the elastomer. The proportion of styrene and butadiene will typically range from 30% to 70% for each component, based on 100 parts of styrene plus butadiene (i.e., 30 to 70 phr (phr = parts per hundred parts rubber)). Typically, the amount of butadiene is about 35% to 55%, while the amount of styrene is about 45% to 65%. Typically, the CSBR has a gel content of 0 to 70 wt.%, a Mooney viscosity of 30 to 150 (ML₁₊₄, 100°C) and a styrene content of 20 to 60 wt.%. The CSBR latex will typically comprise about 40% to 70% total rubber solids.

The container sealant composition additionally includes a filler comprising colloidal silica pretreated with an organosilane. Typically, the composition will include about 5 to 40 parts by weight (solids) of the pretreated, colloidal silica filler per 100 parts by weight (solids) of CSBR (i.e., 5 to 40 phr), preferably about 10 to 30 parts by weight of the pretreated, colloidal silica filler per 100 parts by weight of CSBR (i.e., 10-30 phr). This results in a CSBR (solids) to silica (solids) ratio of 100:5 to 100:40, preferably 100:10 to 100:30.

The colloidal silica may be selected from any of those known in the art. Colloidal silica (also known as silica sol) is a silica of relatively small particle size that will remain in dispersion over relatively long periods of time. A preferred colloidal silica has a particle size in the range of 1 nm to 150 nm, more preferably about 2 nm to 40 nm. A preferred colloidal silica is LUDOX® HS-40 (W.R. Grace & Co.-Conn.), which is available as a 40% aqueous dispersion of silica particles with an average particle size of about 12 nm.

The colloidal silica is pretreated with an organosilane to make it compatible with the rubber latex. The organosilane includes a functional group that will react with the carboxyl group in CSBR to build a network structure in the rubber system. It is theorized that formation of such a network structure provides improved tensile strength and reduced squeeze-out during seaming without the need for a crosslinking agent. Thus, in a preferred embodiment, the container sealant composition is substantially free of crosslinking agent.

Suitable organosilanes useful as pretreatment agents for compatibilizing the colloidal silica include those having the general formula 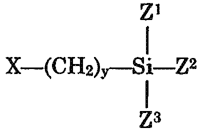 wherein X is a functional group selected from the group consisting of an amino group, a polyamino alkyl group, a mercapto group, a polysulfide group, an epoxy group, a hydroxy group, a vinyl group, an acryloxy group and a methacryloxy group; y is 0 to 8, preferably 2 to 6; and Z¹, Z² and Z³ are each independently selected from the group consisting of hydrogen, C₁ to C₁₈ alkyl, aryl such as phenyl, benzyl and the like, cycloalkyl such as cyclopentyl, cyclohexyl, etc., or aryl, alkoxy or halo substituted alkyl, and C₁ to C₈ alkoxy group, with the proviso that at least one of Z¹, Z² or Z³ must be one of the foregoing alkoxy groups or one of the Z's must be a halogen, hydroxyl, or hydrogen group.

Representative of such compatibilizing pretreatment agents which are commercially available include 3-aminopropyltrimethoxysilane, 3-aminopropyltriethoxysilane, 3-aminopropyldimethylethoxysilane, 3-aminopropyldihydroxymethoxysilane, N-(2-aminoethyl)-3-aminopropyltrimethoxysilane, N-(2-aminoethyl)-3-aminopropyltriethoxysilane, N-methyl-aminopropyltrimethoxysilane, 3-hydroxypropyltripropoxysilane, 3-mercaptopropyltriethoxysilane, glycidylpropyltrimethoxysilane, 3-methacryloxypropyltriethoxysilane, 3-methacryloxypropyltrimethoxysilane, 2-mercaptoethyltriethoxysilane, 3-thiocyanatopropyltriethoxysilane, bis-(3-triethoxythiopropyl) tetrasulfide, vinyltriethoxysilane, vinylphenylmethylsilane, vinyldimethylmethoxysilane, divinyldimethoxysilane, divinylethyldimethoxysilane, dimethylvinylchlorosilane, and the like. Preferred pretreatment agents are the amino-organosilanes, particularly 3-aminopropyltriethoxysilane and N-(2-aminoethyl)-3-aminopropyltrimethoxysilane.

In carrying out the reaction between the organosilane treatment agent and the silica, the agent can be dissolved in a lower alkanol such as propanol or ethanol at a pH below 9 and preferably within the range of 3 to 9 to which water is slowly added, either continuously or incrementally, to commence hydrolysis of the hydrolyzable groups contained in the coupling agent to form the corresponding silanol. To assist in the hydrolysis of an alkoxy group, a pH in the range of 4-4.5 is desirable to minimize side reactions such as oligomerization of the organosilane, and can be maintained by use of dilute mineral acid such as hydrochloric or weak organic acids such as acetic acid. To assist in the hydrolysis of a hydride group, more alkaline conditions are preferred and bases such as KOH, NaOH, NH₄OH, triethylamine, or pyridine can be employed to maintain a pH of 8-9. The choice of base will be dependent on the chemical nature of the specific latex to which the silica slurry is added. When the hydrolyzable group is halogen, it is preferred to mix the organohalo-silane directly with the colloidal silica. The hydrolyzed treatment agent is then blended with a colloidal silica, whereby the silanol groups present in the treatment agent chemically react with the surface of the silica to form a siloxane bond (Si-O-Si) between the agent and the silica surface.

The concentration of the silica in colloidal silica can be varied within relatively wide limits, e.g. 1% to 50%, preferably 20% to 40% by weight silica based on the weight of the slurry. Temperature and reaction time also can be varied within wide limits, but is advantageously performed at elevated temperature (e.g., 80°C) for several hours. The amount of the organosilane treatment agent can likewise be varied within relatively wide limits, e.g., 1 to 15 parts of agent per 100 parts by weight (dry solid) of colloidal silica, preferably 2 to 5 parts by weight of agent per 100 parts by weight of colloidal silica.

After the colloidal silica has been treated with the organosilane compatibilizing agent, the treated colloidal silica may be blended with the rubber latex with sufficient agitation to uniformly distribute the treated colloidal silica throughout the latex. This silica treated latex is stable and can be stored for later use.

The container sealant composition additionally includes a tackifier. The tackifier may be selected from any those commonly used in container sealant compositions. Generally, the tackifier may include at least one material selected from the group consisting of rosin-based resins (e.g., rosin, hydrogenated rosin, rosin ester, hydrogenated rosin ester), terpene-based resins (e.g., α-pinene, 6-pinene, dipentene), phenol-formaldehyde-based resins and petroleum hydrocarbon based resins. The amount of the tackifier included in the composition may be varied, but will typically be included in an amount of about 10 to 150 parts, preferably 15 to 100 parts, by weight per 100 parts by weight (solids) of the rubber component (i.e., 10 to 150 phr, preferably 15 to 100 phr).

The container sealant composition may also comprise an additional filler. Such additional filler may be at least one material selected from the group consisting of clay, titanium dioxide, calcium carbonate, kaolin, alumina white, calcium sulfate, aluminum hydroxide and talc. The amount of the additional filler may be varied, but will typically be included in an amount of about 5-150 parts by weight per 100 parts by weight (solids) of the rubber component (i.e., 5 to 150 phr).

The container sealant composition may also include minor amounts of other additives such as colorants (e.g., carbon black), antioxidants, thickeners (e.g., bentonite, karaya gum, methyl cellulose), bactericides, surfactants, and pH adjusters.

The above-described container sealant composition is advantageously used to seal a can. Generally, the method comprises coating an aqueous dispersion of the container sealant composition onto the curl area of a can cap, drying the composition, placing the coated can cap onto a can body filled with contents, and sealing the can by seaming the flange area of the can body and the curl area of the cap to obtain a sealed can containing the contents. The method may additionally include subjecting the sealed can to a heat treatment to sterilize the contents. The sealant composition of the present invention provides reduced squeeze-out during the seaming process, thus forming a better seal.

### Example 1

This example demonstrates the improvements resulting from the combination of pretreated colloidal silica with CSBR latex in comparison to the use of untreated colloidal silica and in comparison to SBR latex. The colloidal silica or the pretreated colloidal silica are added slowly, while stirring, into SBR latex or CSBR latex in the amounts and ratios shown in Table 1, then these mixtures are stirred for 15 to 20 minutes at 200 to 300 rpm. The results are shown in Table 1.

**Table 1**

| Ingredient | Amount (parts by weight) | | | | | | | |
|---|---|---|---|---|---|---|---|---|
| | A1/A2 | B | C | D | E1/E2 | F | G | H |
| SBR (70%)¹ | 143 | 143 | 143 | 143 | | | | |
| CSBR (50%)² | | | | | 200 | 200 | 200 | 200 |
| Colloidal Silica (40% dispersion)³ | 25 & 75 | | | | 25 & 75 | | | |
| Pretreated Colloidal Silica (40% dispersion)⁴ | | 0 | 25 | 75 | | 0 | 25 | 75 |
| Rubber/Silica | 100/10 | 100/0 | 100/10 | 100/30 | 100/10 | 100/0 | 100/10 | 100/30 |
| Ratio | 100/30 | | | | 100/30 | | | |
| Tensile strength⁵ (MPa) | Both gelled | 4.61 | 4.69 | 7.22 | Both gelled | 7.42 | 12.69 | 13.61 |
| Increase in Tensile Strength | | --- | 2% | 57% | | --- | 71% | 83% |

| | | | | | | | | |
|---|---|---|---|---|---|---|---|---|
| ¹ Butonal 2230 (70% SBR solides; BASF) ² Lacstar 3290N (50% CSBR solids; Dainippon) ³ Ludox HS-40 (40% Si solids; W.R. Grace) ⁴ Ludox HS-40 treated with N-(2-aminoethyl)-3-aminopropyltrimethoxysilane (KBM603: ShinEtsu) in amount of 3% by weight Si solids. ⁵Tensile strength is measured by Autograph tester (model no AG-1S) (Shimadzu) | | | | | | | | |

From the above data, it can be seen that neither SBR nor CSBR could be successfully combined with untreated colloidal silica. (See A1, A2, E1 and E2.) In each case, the latex solution gelled in several hours. By comparison, both SBR and CSBR could be successfully combined with colloidal silica pretreated with organosilane. (See C, D, G and H.) In the case of SBR, the addition of pretreated colloidal silica had essentially no effect on tensile strength at the 100:10 ratio (SBR:Si), and increased tensile strength by 57% at the 100:30 ratio, compared to the tensile strength of the rubber with no silica filler. As a result, the tensile strength of the hybrid SBR:Si sample is too low to adequately meet the needs of a container sealant. (Compare C and D to B.) In the case of CSBR, the addition of pretreated colloidal silica increased the tensile strength by 71% and 83% respectively at the 100:10 and 100:30 ratio (CSBR:Si). (Compare G and H to F.) More importantly, the tensile strength of the CSBR/pretreated colloidal silica compositions was substantially higher than the tensile strength of the SBR/pretreated colloidal silica compositions. (Compare G and H to C and D.)

### Example 2

A container sealant composition is prepared having the ingredients listed below.

| Ingredient | Dry Weight (PHR) |
|---|---|
| CSBR (50%)¹ | 100 |
| Pretreated Colloidal Silica² | 20 |
| Aluminum Silicate (Kaolin clay) | 30 |
| Titanium Dioxide | 8 |
| Tackifier³ | 33.6 |
| Thickener⁴ | 0.48 |
| Carbon black | 0.34 |
| Surfactant⁵ | 1.13 |
| Antioxidant⁶ | 1.07 |
| Bentonite | 0.01 |

| | |
|---|---|
| ¹ Lacstar 3290N (50% CSBR solids; Dainippon) ² Ludox HS-40 treated with N-(2-aminoethyl)-3-aminopropyltrimethoxysilane (KBM603; ShinEtsu) in amount of 3% by weight Si solids. ³ Blend of Aqueous Dispersion of Polymerized Rosin Ester (8.6 phr Foralaxe from Eastman Chemical), Hydrogenated Ester Rosin (15 phr Forelyn 5020-F from Eastman Chemical) and Hydrogenated Rosin (10 phr Superester E-787 from Arakawa Chemical Industries Ltd.) ⁴ Methyl cellulose (0.225) and Karaya gum (0.251) ⁵ Naphthalene sulfonic acid, formaldehyde, Na (1.074) and Naphthalene sulfonic acid, Na (0.057) ⁶ Tetrakis methylene ditertbutylhydroxycinnamate methyl | |

The pretreated colloidal silica is mixed with the CSBR latex and stirred at 30 to 70 rpm for 30 to 90 minutes. The remaining ingredients are added to this dispersion, which is stirred for one hour then defoamed under vacuum. The above-described composition has a tensile strength of 13.15 MPa.

The above-described composition is used to seal a can in the conventional manner. The aqueous dispersion of sealant composition is coated onto the curl area of a can end (or can cap) using a reciprocal liner and heat-dried in an air circulating oven at 90°C for ten minutes. A 190 ml can is filled with hot liquid (e.g., boiled water to simulate food contents), then the can end is placed on the filled can and seamed using a reciprocal double seamer. The seamed can is then subjected to heat sterilization (e.g., 125°C for 30 min.), then allowed to cool to room temperature. The can exhibits substantially reduced squeeze-out of the sealant composition upon seaming and maintains excellent sealed conditions.

## Claims

1. A container sealant composition comprising a latex of a carboxylated styrene-butadiene rubber (CSBR), a filler comprising colloidal silica pretreated with an organosilane, and a tackifier, wherein the weight ratio of CSBR solids to silica solids ranges from 100:5 to 100:40.

2. The container sealant composition according to claim 1, wherein the organosilane has the general formula 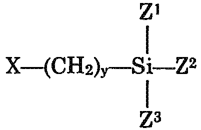 wherein X is a functional group selected from the group consisting of an amino group, a polyamino alkyl group, a mercapto group, a polysulfide group, an epoxy group, a hydroxy group, a vinyl group, an acryloxy group and a methacryloxy group; y is 0 to 8, preferably 2 to 6; and Z¹, Z² and Z³ are each independently selected from the group consisting of hydrogen, C₁ to C₁₈ alkyl, aryl such as phenyl, benzyl and the like, cycloalkyl such as cyclopentyl, cyclohexyl, etc., or aryl, alkoxy or halo substituted alkyl, and C₁ to C₈ alkoxy group, with the proviso that at least one of Z¹, Z² or Z³ must be one of the foregoing alkoxy groups or one of the Z's must be a halogen, hydroxyl, or hydrogen group.

3. The container sealant composition according to any of claims 1 to 2, wherein the colloidal silica has a particle size of 2 nm to 40 nm.

4. The container sealant composition according to any of claims 1 to 3, wherein the organosilane is selected from the group consisting of 3-aminopropyltrimethoxysilane, 3-aminopropyltriethoxysilane, 3-aminopropyldimethylethoxysilane, 3-aminopropyldihydroxymethoxysilane, N-(2-aminoethyl) 3-aminopropyltrimethoxysilane, N-(2-aminoethyl)-3-aminopropyltriethoxysilane, and N-methyl-aminopropyltrimethoxysilane.

5. The container sealant composition according to any of claims 1 to 4, wherein the organosilane is N-(2-aminoethyl)-3-aminopropyltrimethoxysilane.

6. The container sealant composition according to any of claims 1 to 5, wherein the weight ratio of CSBR solids to silica solids ranges from 100:10 to 100:30.

7. The container sealant composition according to any of claims 1 to 6, wherein the tackifier is at least one member selected from the group consisting of rosin-based resins, terpene-based resins, phenol-formaldehyde-based resins, and petroleum hydrocarbon-based resins and the amount of the tackifier is 10-150 parts by weight per 100 parts by weight of the rubber component.

8. The container sealant composition according to any of claims 1 to 7, comprising an additional filler, wherein the additional filler comprises at least one material selected from the group consisting of clay, titanium dioxide, calcium carbonate, kaolin, alumina white, calcium sulfate, aluminum hydroxide and talc, and wherein the amount of the filler is 5-150 parts by weight per 100 parts by weight of the rubber component.

9. The container sealant composition according to any of claims 1 to 8, wherein the carboxylated styrene-butadiene rubber has a gel content of 0 to 70 wt.%, a Mooney viscosity of 30 to 150 (ML₁₊₄, 100°C) and a styrene content of 20 to 60 wt.%.

10. The container sealant composition according to any of claims 1 to 9, wherein the composition is substantially free of crosslinking agent.

11. A method for sealing a can which comprises coating an aqueous dispersion of the container sealant composition according to any of claims 1 to 10 onto the curl area of a can cap, drying the composition, placing the coated can cap onto a can body filled with contents, and sealing the can by seaming the flange area of the can body and the curl area of the cap to obtain a sealed can containing the contents.

12. The method according to claim 11 additionally comprising subjecting the sealed can to a heat treatment to sterilize the contents.

## Patentansprüche

1. Behälterdichtmittelzusammensetzung, die ein Latex aus einem carboxylierten Styrol-Butadien-Kautschuk (CSBR), einen Füllstoff, der kolloidales Siliziumdioxid umfasst, das mit einem Organosilan vorbehandelt ist, und einen Klebrigmacher umfasst, wobei das Gewichtsverhältnis von den CSBR-Feststoffen zu Siliziumdioxid-Feststoffen von 100:5 bis 100:40 reicht.

2. Behälterdichtmittelzusammensetzung nach Anspruch 1, wobei das Organosilan die allgemeine Formel 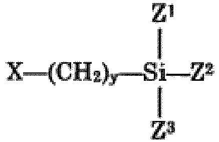 aufweist, in der X eine funktionelle Gruppe ist, die aus der Gruppe bestehend aus einer Aminogruppe, einer Polyaminoalkylgruppe, einer Mercaptogruppe, einer Polysulfidgruppe, einer Epoxygruppe, einer Hydroxygruppe, einer Vinylgruppe, einer Acryloxygruppe und einer Methacryloxygruppe ausgewählt ist; Y 0 bis 8 ist, bevorzugt 2 bis 6; und Z¹, Z² und Z³ jeweils unabhängig aus der Gruppe bestehend aus Wasserstoff, einem C₁- bis C₁₈-Alkyl, einem Aryl, wie zum Beispiel Phenyl, Benzyl oder dergleichen, einem Cycloalkyl, wie zum Beispiel Cyclopentyl, Cyclohexyl usw., oder einem aryl-, alkoxy- oder halogensubstituierten Alkyl oder einer C₁- bis C₈-Alkoxygruppe ausgewählt sind, mit der Bedingung, dass mindestens eines der Z¹, Z² oder Z³ eine der vorgenannten Alkoxygruppen ist oder, dass eines der Z eine Halogen-, eine Hydroxy-, oder eine Wasserstoffgruppe ist.

3. Behälterdichtmittelzusammensetzung nach einem der Ansprüche 1 bis 2, wobei das kolloidale Siliziumdioxid eine Partikelgröße von 2 nm bis 40 nm aufweist.

4. Behälterdichtmittelzusammensetzung nach einem der Ansprüche 1 bis 3, wobei das Organosilan aus der Gruppe bestehend aus 3-Aminopropyltrimethoxysilan, 3-Aminopropyltriethoxysilan, 3-Aminopropyldimethylethoxysilan, 3-Aminopropyldihydroxymethoxysilan, N-(2-Aminoethyl)-3-aminopropyltrimethoxysilan, N-(2-Aminoethyl)-3-aminopropyltriethoxysilan und N-Methyl-aminopropyltrimethoxysilan ausgewählt ist.

5. Behälterdichtmittelzusammensetzung nach einem der Ansprüche 1 bis 4, wobei das Organosilan N-(2-Aminoethyl)-3-aminopropyl-trimethoxysilan ist.

6. Behälterdichtmittelzusammensetzung nach einem der Ansprüche 1 bis 5, wobei das Gewichtsverhältnis der CSBR-Feststoffe zu Siliziumdioxid-Feststoffen von 100:10 bis 100:30 reicht.

7. Behälterdichtmittelzusammensetzung nach einem der Ansprüche 1-6, wobei der Klebrigmacher mindestens ein Mitglied der Gruppe bestehend aus auf Kolophonium basierenden Harzen, auf Therpen basierenden Harzen, auf Phenol-Formaldehyd basierenden Harzen und auf Petroleum-Kohlenwasserstoff basierenden Harzen ist und die Menge des Klebrigmachers 10-150 Gewichtsteile pro 100 Gewichtsteile der Kautschukkomponente ausmacht.

8. Behälterdichtmittelzusammensetzung nach einem der Ansprüche 1-7, die einen zusätzlichen Füllstoff umfasst, wobei der zusätzliche Füllstoff mindestens ein Material umfasst, das aus der Gruppe bestehend aus Ton, Titandioxid, Calciumcarbonat, Kaolin, Tonerde, Calciumsulfat, Aluminiumhydroxid und Talk ausgewählt ist und wobei die Menge des Füllstoffs 5-150 Gewichtsteile pro 100 Gewichtsteile der Kautschukkomponente ausmacht.

9. Behälterdichtmittelzusammensetzung nach einem der Ansprüche 1-8, wobei der carboxylierte Styrol-Butadienkautschuk einen Gelgehalt von 0 bis 70 Gew.-%, eine Mooney-Viskosität von 30 bis 150 (ML₁₊₄, 100°C) und einen Styrolgehalt von 20 bis 60 Gew.-% aufweist.

10. Behälterdichtmittelzusammensetzung nach einem der Ansprüche 1-9, wobei die Zusammensetzung im Wesentlichen frei von Vernetzungsmitteln ist.

11. Verfahren zum Abdichten einer Dose, bei dem eine wässrige Dispersion der Behälterdichtmittelzusammensetzung gemäß einem der Ansprüche 1 bis 10 auf die Rollfläche eines Dosendeckels aufgetragen wird, die Zusammensetzung getrocknet wird, der beschichtete Dosendeckel auf einen Dosenkörper, der mit Inhalt gefüllt ist, aufgebracht wird, und die Dose abgedichtet wird, indem der Flanschbereich des Dosenkörpers und die Rollfläche des Deckels gefalzt wird, um eine abgedichtete Dose zu erhalten, die den Inhalt enthält.

12. Verfahren nach Anspruch 11, bei dem die abgedichtete Dose zusätzlich einer Wärmebehandlung unterzogen wird, um den Inhalt zu sterilisieren.

## Revendications

1. Composition d'étanchéité pour récipient, comprenant un latex constitué d'un caoutchouc styrène-butadiène carboxylé (CSBR), une charge constituée de silice colloïdale préalablement traitée par un organosilane, et un agent donnant du collant, dans laquelle le rapport pondéral des matières solides du CSBR aux matières solides de la silice est compris dans l'intervalle allant de 100/5 à 100/40.

2. Composition d'étanchéité pour récipient selon la revendication 1, dans laquelle l'organosilane répond à la formule générale : 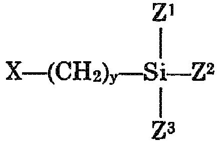 où :
- X représente un groupe fonctionnel choisi parmi les groupes amino, polyamino-alkyle, sulfanyle, polysulfure, époxy, hydroxyle, vinyle, acryloxy et méthacryloxy ;
- l'indice y vaut de 0 à 8, et de préférence 2 à 6 ;
- et Z¹, Z² et Z³ représentent chacun, indépendamment, une entité choisie parmi un atome d'hydrogène, un groupe alkyle en C₁ à C₁₈, aryle, tel que phényle, benzyle ou un groupe semblable, cycloalkyle, tel que cyclopentyle, cyclohexyle, etc., ou alkyle à substituant(s) aryle, alcoxy ou halogéno, et un groupe alcoxy en C₁ à C₈, étant entendu qu'au moins une des entités représentées par les symboles Z¹, Z² et Z³ doit être l'un des groupes alcoxy précédemment cités, ou une des entités représentées par les symboles Z doit être un atome d'hydrogène ou d'halogène ou un groupe hydroxyle.

3. Composition d'étanchéité pour récipient selon l'une des revendications 1 et 2, dans laquelle la taille des particules de silice colloïdale vaut de 2 nm à 40 nm.

4. Composition d'étanchéité pour récipient selon l'une quelconque des revendications 1 à 3, dans laquelle l'organosilane est choisi dans l'ensemble constitué par les composés 3-aminopropyl-triméthoxy-silane, 3-aminopropyltriéthoxy-silane, 3-aminopropyl-diméthyléthoxy-silane, 3-aminopropyl-dihydroxyméthoxy-silane, N-(2-aminoéthyl)-3-aminopropyl-triméthoxy-silane, N-(2-amino-éthyl)-3-aminopropyl-triéthoxy-silane et N-méthyl-aminopropyl-triméthoxy-silane.

5. Composition d'étanchéité pour récipient selon l'une quelconque des revendications 1 à 4, dans laquelle l'organosilane est du N-(2-aminoéthyl)-3-aminopropyl-triméthoxy-silane.

6. Composition d'étanchéité pour récipient selon l'une quelconque des revendications 1 à 5, dans laquelle le rapport pondéral des matières solides du CSBR aux matières solides de la silice est compris dans l'intervalle allant de 100/10 à 100/30.

7. Composition d'étanchéité pour récipient selon l'une quelconque des revendications 1 à 6, dans laquelle l'agent donnant du collant est au moins une substance choisie dans l'ensemble formé par les résines à base de colophane, les résines à base de terpène, les résines à base de phénol-formaldéhyde et les résines à base d'hydrocarbures pétroliers, et la quantité d'agent donnant du collant représente 10 à 150 parties en poids pour 100 parties en poids de composant caoutchouc.

8. Composition d'étanchéité pour récipient selon l'une quelconque des revendications 1 à 7, qui comprend une charge supplémentaire constituée d'au moins une matière choisie dans l'ensemble formé par les suivantes : argile, dioxyde de titane, carbonate de calcium, kaolin, blanc d'alumine, sulfate de calcium, hydroxyde d'aluminium et talc, et dans laquelle la charge se trouve en une proportion de 5 à 150 parties en poids pour 100 parties en poids de composant caoutchouc.

9. Composition d'étanchéité pour récipient selon l'une quelconque des revendications 1 à 8, dans laquelle le caoutchouc styrène-butadiène carboxylé présente une teneur en gel de 0 % à 70 % en poids, une viscosité Mooney (ML₁₊₄, 100°C) de 30 à 150, et une teneur en styrène de 20 % à 60 % en poids.

10. Composition d'étanchéité pour récipient selon l'une quelconque des revendications 1 à 9, qui est pratiquement exempte d'agent de réticulation.

11. Procédé en vue de fermer hermétiquement une boîte métallique, qui comprend les étapes consistant à déposer, sur la zone d'ourlet d'un couvercle de boîte métallique, une dispersion aqueuse d'une composition d'étanchéité pour récipient selon l'une quelconque des revendications 1 à 10, faire sécher cette composition, placer le couvercle de boîte métallique ainsi revêtu sur un corps de boîte métallique rempli d'un contenu, et fermer hermétiquement la boîte métallique en sertissant la zone de collerette du corps de la boîte et la zone d'ourlet du couvercle, de manière à obtenir une boîte métallique fermée hermétiquement et renfermant un contenu.

12. Procédé selon la revendication 11, qui comprend en plus une étape consistant à exposer la boîte métallique fermée hermétiquement à un traitement thermique en vue de stériliser son contenu.
